# EUROPEAN PATENT APPLICATION

(11) **EP 1 666 567 A1**
(43) Date of publication of application: **07.06.2006**
(21) Application number: 04771101.5
(22) Date of filing: 30.07.2004
(51) Int. Cl.: C10B 49/04, C10B 53/02

(54) **CARBONIZING DEVICE, CARBONIZING SYSTEM, AND CARBONIZING METHOD**

(30) Priority: 04.08.2003 JP 2003286139
(71) Applicant: SUNTORY LIMITED, Osaka-shi, Osaka 530-8203 (JP)
(72) Inventor: YOKOYAMA, Keiichi, Nishinomiya-shi, Hyogo 6638114 (JP); FUJIWARA, Masaaki, 2790011 (JP); UEDA, Sadatoshi, Adachi-ku, Tokyo 1200002 (JP); ARAI, Yoshiaki, Adachi-ku, Tokyo 1200002 (JP); KUDO, Tatsushi, Adachi-ku, Tokyo 1200002 (JP); MIYAHARA, Shigeru, Adachi-ku, Tokyo 1200002 (JP)
(74) Representative: Kaiser, Magnus
(86) International application number: PCT/JP2004/010941
(87) International publication number: WO 2005/012457

(57) **Abstract**

To make it easier to carbonize the processing target material to a desired carbonized condition and also to make installment within a limited installment space possible.

A carbonizing apparatus includes a carbonizing furnace 6 having a feeding portion 33 for a processing target material, a takeout portion 35 for a carbonized material, a blowout portion 35 for combustion air and an exhausting portion 34 for combustion exhaust gas and a stirring device 39 capable of stirring the processing target material inside the carbonizing furnace. The blowout amount of the combustion air is adjustable. The apparatus is operable to carbonize the processing target material fed from the feeding portion, with stirring, spontaneously combusting and moving the material while moving this material toward the takeout portion and subsequently to take out the resultant carbonized material from the takeout portion. The carbonizing furnace is constructed as a vertical type including the feeding portion and the exhausting portion at an upper section of the furnace and including the takeout portion and the blowout portion at a lower section of the furnace, so that the processing target material can be moved by the deadweight thereof toward the takeout portion, a takeout speed of the carbonized material from the takeout portion being adjustable. The stirring device includes a stirring member 43 capable of swiveling about a vertical axis X.

## Description

### Technical Field

The present invention relates to a carbonizing apparatus, a carbonizing system and a carbonizing method.

### Background Art

As a carbonizing system including a carbonizing apparatus for carbonizing a processing target material, there is conceivable a carbonizing system including a carbonizing apparatus A having a rotary kiln 70 acting as a carbonizing furnace 6 operable to carbonize the processing target material 1 while moving the material from one end side to the other end side, a drying device 4 having a drying chamber 13 for drying the processing target material 1, a drying gas feeding passage 71 for feeding high-temperature gas as drying gas present inside the rotary kiln 70 to the drying chamber 13, and a dried processing target material feeding passage 72 for feeding the dried processing target material 1 dried inside the drying chamber 13 toward one end side of the rotary kiln 70. In operation, the processing target material 1 charged into a hopper 3 is conveyed by a screw conveyer 8 to the drying chamber 13, then, moved toward a takeout portion 35 provided on the other end side of the rotary kiln 70, during which the material is carbonized. Thereafter, a carbonized material 2 is taken out from the takeout portion 35 (carbonizing system of Comparison Example).

In this case, if an indirect heating method for heating the processing target material 1 from the outside of the rotary kiln 70 is employed, the processing target material 1 is moved toward the takeout portion 35 and carbonized while being retorted. Therefore, in order to effect an operation for rendering harmless retorting generated gas (pyrolytic gas) generated inside the rotary kin 70 by combusting this gas within a combustion chamber 73 provided separately from the rotary kiln 70, it is necessary to connect the rotary kiln 70 to a duct 74 for feeding the retorting generated gas from the rotary kiln 70 to the combustion chamber 73 and to feed the resultant combustion gas to the drying chamber 13 through the drying gas feeding passage 71. This construction however tends to invite condensation and resultant accumulation of the retorting generated gas inside the duct 74, hence suffering the shortcoming of troublesome maintenance required.

Further, in the case of a direct heating method for heating the processing target material 1 by feeding hot air current to the inside of the rotary kiln 70, combustion air for combusting the processing target material 1 is fed from one end side of the rotary kiln 70, so that the processing target material 1 is combusted spontaneously and carbonized while being moved toward the takeout portion 35. Therefore, in order to avoid failure of sufficient carbonization of the processing target material 1 due to generation of unburned gas resulting from possible shortage of the combustion air or burned-out exhaustion of the processing target material due to excessive combustion air conversely, it is necessary to feed the combustion air in an appropriate distribution along the moving direction of the processing target material, thus inviting difficulty in the feeding of the combustion air. Moreover, in order to effect an operation for rendering harmless the unburned gas by combusting this gas within the combustion chamber 73 provided separately from the rotary kiln 70, it is necessary to connect the rotary kiln 70 to a duct 74 for feeding the unburned gas from the rotary kiln 70 to the combustion chamber 73, just like the indirect heating method.

In addition, with either the indirect heating method or the direct heating method, such components as the duct 74 for feeding the retorting generated gas or the unburned gas from the rotary kiln 70 to the separate combustion chamber 73, a feeding portion 33 for feeding the processing target material 1 to the rotary kiln, and the takeout portion 35 for taking out the carbonized material from the rotary kiln 70 need to be mounted to be slidable relative to the rotary kiln 70. Therefore, there is the tendency of inadvertent intrusion of air through the sliding portions into the rotary kiln 70, hence, the temperature control of the processing target material 1 inside the rotary kiln 70 is difficult.

Further, as the drying chamber 13 is communicated with the rotary kiln (carbonizing furnace) 6, the carbonizing operation necessarily depends on the drying operation inside the drying chamber 13, thus causing problems in terms of economy and quality consistency.

Also, in case the processing target material comprises residual substance generated from a beverage manufacturing process, because of the large volume of the material, the material needs to be stored before the drying chamber under a condition not suitable for storage such as condition tending to invite leakage of the smell or odor of the substance therefrom.

In order to cope with the above, according to the conventional carbonizing system, the carbonizing apparatus includes a non-rotary type carbonizing furnace not requiring such slidable mounting of the processing target material feeding portion and the carbonized material takeout portion, thus being resistant against leakage of e.g. high-temperature gas from inside the carbonizing furnace, and the feeding portion and the takeout portion are disposed on the right and left sides of this carbonizing furnace respectively. Furthermore, in order to promote feeding of the combustion air in an appropriate distribution thereof along the moving direction of the processing target material, adjustable blowout portions capable of adjustment of blowout amount of the combustion air for each segment of the moving path of the processing target material are provided at the bottom of the carbonizing furnace between the feeding portion and the takeout portion. Moreover, in order to avoid condensation and subsequent accumulation of e.g. the retorting generated gas inside the duct for feeding this gas to the combustion chamber, the combustion chamber is connected to a combustion exhaust gas exhausting portion provided adjacent the upper portion of the takeout portion of the carbonizing furnace (see Patent Document 1).

There are further provided a screw conveyer for conveying the processing target material inside the carbonizing furnace from the feeding portion to the takeout portion substantially horizontally and a stirring device having stirring blades rotatable in unison with the screw conveyer for stirring the processing target material inside the carbonizing furnace. In operation, while the processing target material fed from the feeding portion is being stirred and mixed around a horizontal shaft and spontaneously combusted at the same time, the material is moved substantially horizontally by the screw conveyer toward the takeout portion, whereby this processing target material is carbonized. Then, the resultant carbonized material can be taken out from the takeout portion.
Patent Document 1: Japanese Patent Application "Kokai" No. 2000-136390

### Disclosure of the Invention

### Object to be Achieved by Invention

According to the conventional carbonizing system described above, the system includes the carbonizing apparatus having the carbonizing furnace for carbonizing the processing target material while moving the material substantially horizontally toward the takeout portion. Therefore, even if the entire processing target material is retained for a substantially same period of time inside the carbonizing furnace after being fed therein, the processing target material (portion) accumulated at an upper portion is more readily subjected to a higher temperature. Also, the combustion chamber is connected to the exhausting portion provided adjacent the upper portion of the takeout portion of the carbonizing furnace for burning the retorting generated gas or the unburned combustion, the heat generated inside this combustion chamber tends to further heat the processing target material which has a relatively high temperature already as having been moved to the vicinity of the takeout portion. Hence, there is the shortcoming of difficulty of the thermal management of the processing target material to carbonize the material to a desired carbonized condition.

Further, since the blowout amount of the combustion air from the blowout portion is controlled by means of the temperature inside the carbonizing furnace, it is not possible to control the amount according to the temperature of the processing target material per se. Hence, this further adds to the difficulty in carbonizing the material to the desired carbonized condition.

Moreover, as the feeding portion and the takeout portion are disposed on the right and left sides of the carbonizing furnace and the processing target material fed from the feeding portion is moved substantially horizontally toward the takeout portion, the system has the further shortcoming of requiring large installment space which needs to be horizontally long along the moving direction of the processing target material.

In addition, the convention has not addressed in particular to the problem associated with the construction of the drying chamber and the carbonizing furnace being communicated with each other.

The present invention has been made in view of the above-described state of the art and an object of the invention is to make it easier to carbonize the processing target material to a desired carbonized condition and also to make installment within a limited installment space possible.

### Means to Achieve the Object

According to a first characterizing feature of a carbonizing apparatus relating to the present invention, the apparatus comprises:
a carbonizing furnace having a feeding portion for a processing target material, a takeout portion for a carbonized material, a blowout portion for combustion air and an exhausting portion for combustion exhaust gas;
a stirring device capable of stirring the processing target material inside the carbonizing furnace;
a blowout amount of the combustion air from the blowout portion being adjustable;
the apparatus being operable to carbonize the processing target material fed from the feeding portion, with stirring, spontaneously combusting and moving the material while moving this material toward the takeout portion and subsequently to take out the resultant carbonized material from the takeout portion;
wherein said carbonizing furnace is constructed as a vertical type including said feeding portion and said exhausting portion at an upper section of the furnace and including said takeout portion and said blowout portion at a lower section of the furnace, so that the processing target material can be moved by the deadweight thereof toward the takeout portion, a takeout speed of the carbonized material from the takeout portion being adjustable; and
the stirring device comprises a stirring member capable of swiveling about a vertical axis.

According to a second characterizing feature of the carbonizing apparatus relating to the present invention, in the above-described characterizing construction, said carbonizing furnace includes a temperature detecting portion capable of detecting temperature of the processing target material, the blowout amount of the combustion air from the blowout portion being adjustable according to the temperature of the processing target material detected by said temperature detecting portion.

According to a third characterizing feature of the carbonizing apparatus relating to the present invention, in the above-described characterizing construction, said blowout portion is provided in a peripheral wall of the carbonizing furnace and in the stirring member, respectively.

According to a fourth characterizing feature of the carbonizing apparatus relating to the present invention, in the above-described characterizing construction, an inside of the carbonizing furnace located between said feeding portion and said exhausting portion is formed as a combustion space for unburned combustion gas.

According to a first characterizing feature of a carbonizing system relating to the present invention, the system comprises:
a drying device for a processing target material;
a storage tank for the processing target material;
conveying means for conveying the processing target material dried by the drying device to the storage tank; and
feeding means capable of feeding the processing target material in the storage tank to a carbonizing apparatus.

According to a second characterizing feature of the carbonizing system relating to the present invention, in the above-described characterizing construction, said carbonizing apparatus includes:
a carbonizing furnace having a feeding portion for a processing target material, a takeout portion for a carbonized material, a blowout portion for combustion air and an exhausting portion for combustion exhaust gas;
a stirring device capable of stirring the processing target material inside the carbonizing furnace;
a blowout amount of the combustion air from the blowout portion being adjustable;
the system being operable to carbonize the processing target material fed from the feeding portion, with stirring, spontaneously combusting and moving the material while moving this material toward the takeout portion and subsequently to take out the resultant carbonized material from the takeout portion.

According a third characterizing feature of the carbonizing system relating to the present invention, in the above-described characterizing construction, said carbonizing furnace is constructed as a vertical type including said feeding portion and said exhausting portion at an upper section of the furnace and including said takeout portion and said blowout portion at a lower section of the furnace, so that the processing target material can be moved by the deadweight thereof toward the takeout portion, a takeout speed of the carbonized material from the takeout portion being adjustable; and
the stirring device includes a stirring member capable of swiveling about a vertical axis.

According a fourth characterizing feature of the carbonizing system relating to the present invention, in the above-described characterizing construction, said carbonizing furnace includes a temperature detecting portion capable of detecting temperature of the processing target material, the blowout amount of the combustion air from the blowout portion being adjustable according to the temperature of the processing target material detected by said temperature detecting portion.

According to a fifth characterizing feature of the carbonizing system relating to the present invention, in the above-described characterizing construction, said blowout portion is provided in a peripheral wall of the carbonizing furnace and in the stirring member, respectively.

According to a sixth characterizing feature of the carbonizing system relating to the present invention, in the above-described characterizing construction, an inside of the carbonizing furnace located between said feeding portion and said exhausting portion is formed as a combustion space for unburned combustion gas.

According to a seventh characterizing feature of the carbonizing system relating to the present invention, in the above-described characterizing construction, an exhaust heat recovering boiler is connected to said exhausting portion.

According to an eighth characterizing feature of the carbonizing system relating to the present invention, in the above-described characterizing construction, said drying device includes a drying chamber capable of accommodating the processing target material and a drying gas blowout portion capable of blowing out drying gas from under the processing target material inside the drying chamber, thus forming a fluid bed for drying the processing target material under a floating condition, said conveying means being capable of taking out dried processing target material floating inside the drying chamber and conveying this material to the storage tank.

According to a ninth characterizing feature of the carbonizing system relating to the present invention, the system comprises the carbonizing apparatus relating to the present invention and a drying device for the processing target material, wherein said drying device is provided integral with an upper portion of a carbonizing furnace included in the carbonizing apparatus and the system further comprises a drying gas feeding passage capable of feeding combustion exhaust gas of the processing target material inside the carbonizing furnace as drying gas to said drying device.

According to a tenth characterizing feature of the carbonizing system relating to the present invention, in the above-described characterizing construction, said drying device includes a drying chamber capable of accommodating the processing target material and a drying gas blowout portion capable of blowing out drying gas from under the processing target material inside the drying chamber, thus forming a fluid bed for drying the processing target material under a floating condition, the system further comprising feeding means capable of taking out the dried processing target material floating inside the drying chamber and conveying this material to the feeding portion.

According to a first characterizing feature of a carbonizing method relating to the present invention, the method comprising the steps of:
drying a processing target material by a drying device;
subsequently conveying the dried material to a storage tank for its temporary storage in the tank; and
subsequently feeding the material for its carbonization.

### Effects of the Invention

According to the first characterizing feature of the carbonizing apparatus relating to the present invention, the carbonizing apparatus comprises: a carbonizing furnace having a feeding portion for a processing target material, a takeout portion for a carbonized material, a blowout portion for combustion air and an exhausting portion for combustion exhaust gas; a stirring device capable of stirring the processing target material inside the carbonizing furnace; a blowout amount of the combustion air from the blowout portion being adjustable; the apparatus being operable to carbonize the processing target material fed from the feeding portion, with stirring, spontaneously combusting and moving the material while moving this material toward the takeout portion and subsequently to take out the resultant carbonized material from the takeout portion; wherein said carbonizing furnace is constructed as a vertical type including said feeding portion and said exhausting portion at an upper section of the furnace and including said takeout portion and said blowout portion at a lower section of the furnace, so that the processing target material can be moved by the deadweight thereof toward the takeout portion. Therefore, this apparatus can be installed in a limited installment space. Further, as the apparatus allows adjustment of a takeout speed of the carbonized material from the takeout portion and the stirring device includes a stirring member capable of swiveling about a vertical axis, the processing target material can be readily carbonized to a desired carbonized condition and the quality of the carbonized material can be stable.

Namely, while the processing target material is being stirred substantially horizontally by the stirring member swiveling about a vertical axis so as to restrict undesired mutual mixing of processing target material portions of different retention time periods after feeding thereof into the carbonizing furnace, the combustion air can be fed from the blowout portion provided at the lower section of the carbonizing furnace so as to be uniformly fed to the entire processing target material. Therefore, with the uniform distribution of the combustion air, the entire processing target material portions inside the carbonizing furnace can be caused to be combusted spontaneously according to the respective retention time periods thereof after their feeding into the carbonizing furnace. Also, by the adjustment of the takeout speed of the carbonized material from the takeout portion, the speed of deadweight movement of the processing target material toward the takeout portion can be adjusted in association with this takeout speed. Hence, desired adjustment of a carbonization reaction speed of the processing target material is made possible. Then, by allowing the processing target material to be moved by its dead weight slowly and limiting the amount of combustion air to be fed thereto to a small amount, it is possible to cause the carbonization reaction of the processing target material to progress slowly. In such manner, the processing target material can be carbonized to a desired carbonized condition easily.

Further, as the stirring member stirs the processing target material, mutual adhesion of processing material portions or particles due to generation of tar can be prevented, thus allowing smooth deadweight movement of the processing target material toward the takeout portion. And, with this, the quality of the carbonized material can be stable.

As described above in the second characterizing feature of the carbonizing apparatus relating to the present invention, the temperature of the processing target material can be detected directly by the temperature detecting portion. Therefore, it is possible to speedily adjust the blowout amount of the combustion air directly, in accordance with the temperature condition of the processing target material. With this, the processing target material can be carbonized to a desired carbonized condition easily.

Further, as described above in the third characterizing feature of the carbonizing apparatus relating to the present invention, the blowout portion is provided in a peripheral wall of the carbonizing furnace and in the stirring member, respectively. Hence, the combustion air can be fed uniformly not only to the processing target material located adjacent the peripheral wall of the carbonizing furnace, but also to the processing target material located adjacent the center of the furnace. As a result, the entire processing target material portions inside the carbonizing furnace can be caused to be combusted spontaneously according to the respective retention time periods thereof after their feeding into the carbonizing furnace.

Further, as described above in the fourth characterizing feature of the carbonizing apparatus relating to the present invention, without providing a combustion chamber separately, unburned combustion gas can be combusted at the combustion space formed inside the carbonizing furnace located between the feeding portion and the exhausting portion. Hence, there is no need for a duct for feeding the unburned combustion air into the combustion chamber, and there is no risk of condensation of volatile components included in the unburned combustion gas and subsequent inadvertent accumulation thereof inside such duct. With this, the trouble of the apparatus maintenance can be relieved. And, even if the processing target material is heated with the combustion heat of the unburned combustion gas, this heating occurs to the processing target material which has just been fed from the feeding portion. Hence, the processing target material immediately after its feeding can be heated preliminarily, with reduced risk of adverse influence on the combustion condition of the processing target material which has been moved to the vicinity of the takeout portion and whose carbonization has progressed to a significant degree already.

Moreover, such processing target material which has been moved to the vicinity of the takeout portion and whose carbonization has progressed to a significant degree already can be carbonized without being influenced by oxygen present at the unburned gas combustion space by means of an "oxygen shielding area" which is formed by accumulation thereon of un-carbonized processing target material fed from the feeding portion. In this manner, it is possible to obtain carbonized material having a small BET specific surface area.

In the above, as described above in the first characterizing feature of the carbonizing system relating to the present invention, in the non-limiting case of the processing target material comprising residual substance generated from a manufacturing process of beverage, food or livestock feed or the like, such processing target material can be dried and then stored in the storage tank and this processing target material in the storage tank can be fed by the conveying means for its carbonization. Hence, even when there occurs irregularity in the generation amount of the processing target material, such irregularity can be effectively absorbed by the storage tank and the feeding means can feed the processing target material in the storage tank to the feeding portion by a fixed amount, depending on the carbonizing capacity of the carbonizing apparatus. As a result, the carbonizing capacity of the carbonizing apparatus can be utilized efficiently.

Further, as the processing target material can be stored under the dried condition in the storage tank, the efficiency and the condition of storage can be enhanced greatly. Consequently, the processing target material can be carbonized in an efficient and economic manner, with high quality and high manufacturing stability.

Further, as described above in the second characterizing feature of the carbonizing system relating to the present invention, said carbonizing apparatus includes: a carbonizing furnace having a feeding portion for a processing target material, a takeout portion for a carbonized material, a blowout portion for combustion air and an exhausting portion for combustion exhaust gas; a stirring device capable of stirring the processing target material inside the carbonizing furnace; a blowout amount of the combustion air from the blowout portion being adjustable;
the system being operable to carbonize the processing target material fed from the feeding portion, with stirring, spontaneously combusting and moving the material while moving this material toward the takeout portion and subsequently to take out the resultant carbonized material from the takeout portion.

Further, as described above in the third characterizing feature of the carbonizing system relating to the present invention, said carbonizing furnace is constructed as a vertical type including said feeding portion and said exhausting portion at an upper section of the furnace and including said takeout portion and said blowout portion at a lower section of the furnace, so that the processing target material can be moved by the deadweight thereof toward the takeout portion. Therefore, this system can be installed in a limited installment space.

Further, as the system allows adjustment of a takeout speed of the carbonized material from the takeout portion and the stirring device includes a stirring member capable of swiveling about a vertical axis, the processing target material can be readily carbonized to a desired carbonized condition and the quality of the carbonized material can be stable.

Namely, while the processing target material is being stirred substantially horizontally by the stirring member swiveling about a vertical axis so as to restrict undesired mutual mixing of processing target material portions of different retention time periods after feeding thereof into the carbonizing furnace, the combustion air can be fed from the blowout portion provided at the lower section of the carbonizing furnace so as to be uniformly fed to the entire processing target material. Therefore, with the uniform distribution of the combustion air, the entire processing target material portions inside the carbonizing furnace can be caused to be combusted spontaneously according to the respective retention time periods thereof after their feeding into the carbonizing furnace. Also, by the adjustment of the takeout speed of the carbonized material from the takeout portion, the speed of deadweight movement of the processing target material toward the takeout portion can be adjusted in association with this takeout speed. Hence, desired adjustment of a carbonization reaction speed of the processing target material is made possible. Then, by allowing the processing target material to be moved by its dead weight slowly and limiting the amount of combustion air to be fed thereto to a small amount, it is possible to cause the carbonization reaction of the processing target material to progress slowly. In such manner, the processing target material can be carbonized to a desired carbonized condition easily.

Further, as the stirring member stirs the processing target material, mutual adhesion of processing material portions or particles due to generation of tar can be prevented, thus allowing smooth deadweight movement of the processing target material toward the takeout portion. And, with this, the quality of the carbonized material can be stable.

Further, as described above in the fourth characterizing feature of the carbonizing system relating to the present invention, the temperature of the processing target material can be detected directly by the temperature detecting portion. Therefore, it is possible to adjust the blowout amount of the combustion air directly, depending on the temperature condition of the processing target material. With this, the processing target material can be carbonized to a desired carbonized condition easily.

Further, as described above in the fifth characterizing feature of the carbonizing system relating to the present invention, the blowout portion is provided in a peripheral wall of the carbonizing furnace and in the stirring member, respectively. Hence, the combustion air can be fed uniformly not only to the processing target material located adjacent the peripheral wall of the carbonizing furnace, but also to the processing target material located adjacent the center of the furnace. As a result, the entire processing target material portions inside the carbonizing furnace can be caused to be combusted spontaneously according to the respective retention time periods thereof after their feeding into the carbonizing furnace.

Further, as described above in the sixth characterizing feature of the carbonizing system relating to the present invention, without providing a combustion chamber separately, unburned combustion gas can be combusted at the combustion space formed inside the carbonizing furnace located between the feeding portion and the exhausting portion. Hence, there is no need for a duct for feeding the unburned combustion air into the combustion chamber, and there is no risk of condensation of volatile components included in the unburned combustion gas and subsequent inadvertent accumulation thereof inside such duct. With this, the trouble of the apparatus maintenance can be relieved. And, even if the processing target material is heated with the combustion heat of the unburned combustion gas, this heating occurs to the processing target material which has just been fed from the feeding portion. Hence, the processing target material immediately after its feeding can be heated preliminarily, with reduced risk of influence on the combustion condition of the processing target material which has been moved to the vicinity of the takeout portion and whose carbonization has progressed to a significant degree already.

Moreover, such processing target material which has been moved to the vicinity of the takeout portion and whose carbonization has progressed to a significant degree already can be carbonized without being influenced by oxygen present at the unburned gas combustion space by means of an "oxygen shielding area" which is formed by accumulation thereon of un-carbonized processing target material fed from the feeding portion. In this manner, it is possible to obtain carbonized material having a small BET specific surface area.

Further, as described above in the seventh characterizing feature of the carbonizing system relating to the present invention, combustion exhaust gas of the processing target material can be recovered by the exhaust heat recovering boiler through the exhausting portion. Hence, exhaust heat of the combustion exhaust gas can be utilized efficiently.

Further, as described above in the eighth characterizing feature of the carbonizing system relating to the present invention, the drying device includes a drying chamber capable of accommodating the processing target material and a drying gas blowout portion capable of blowing out drying gas from under the processing target material inside the drying chamber, thus forming a fluid bed for drying the processing target material under a floating condition. With this, the processing target material can be caused to float in portion-by-portion manner to be subjected to uniform spraying of the drying gas against the same, whereby the processing target material can be dried in an efficient manner. Further, as the conveying means is capable of taking out dried processing target material floating inside the drying chamber and conveying this material to the storage tank, the processing target material portion which has become lighter as the result of its drying can be sorted out to be stored in the storage tank.

Further, as described above in the ninth characterizing feature of the carbonizing system relating to the present invention, the system comprises the carbonizing apparatus relating to the present invention and a drying device for the processing target material, wherein said drying device is provided integral with an upper portion of a carbonizing furnace. Hence, the drying device can be installed in a compact manner together with the carbonizing furnace. Further, as there is provided a drying gas feeding passage capable of feeding combustion exhaust gas of the processing target material inside the carbonizing furnace as drying gas to said drying device, the exhaust heat of the combustion exhaust gas can be utilized efficiently.

Further, as described above in the tenth characterizing feature of the carbonizing system relating to the present invention, the drying device includes a drying chamber capable of accommodating the processing target material and a drying gas blowout portion capable of blowing out drying gas from under the processing target material inside the drying chamber, thus forming a fluid bed for drying the processing target material under a floating condition. With this, the processing target material can be caused to float in portion-by-portion manner to be subjected to uniform spraying of the drying gas against the same, whereby the processing target material can be dried in an efficient manner. Further, as the system further comprises feeding means capable of taking out dried processing target material floating inside the drying chamber and conveying this material to the feeding portion, the processing target material portion which has become lighter as the result of its drying can be sorted out to be stored in the storage tank.

Further, as described above in the first characterizing feature of the carbonizing method relating to the present invention, in the non-limiting case of the processing target material comprising residual substance generated from a manufacturing process of beverage, food or livestock feed or the like, such processing target material can be dried and then stored temporarily in the storage tank and this processing target material in the storage tank can be fed to the carbonizing apparatus by the conveying means for its carbonization. Hence, even when there occurs irregularity in the generation amount of the processing target material, such irregularity can be effectively absorbed by the storage tank and the processing target material in the storage tank can be fed by a fixed amount, depending on the carbonizing capacity of the carbonizing apparatus. As a result, the carbonizing capacity of the carbonizing apparatus can be utilized efficiently.

Further, as the processing target material can be stored under the dried condition in the storage tank, the efficiency and the condition of storage can be enhanced greatly. Consequently, the processing target material can be carbonized in an efficient and economic manner, with high quality and high manufacturing stability.

### Best Mode for Embodying the Invention

Next, embodiments of the present invention will be described with reference to the accompanying drawings. Incidentally, the portions denoted with the same reference marks as the convention denote the same or corresponding portions.

### [First Embodiment]

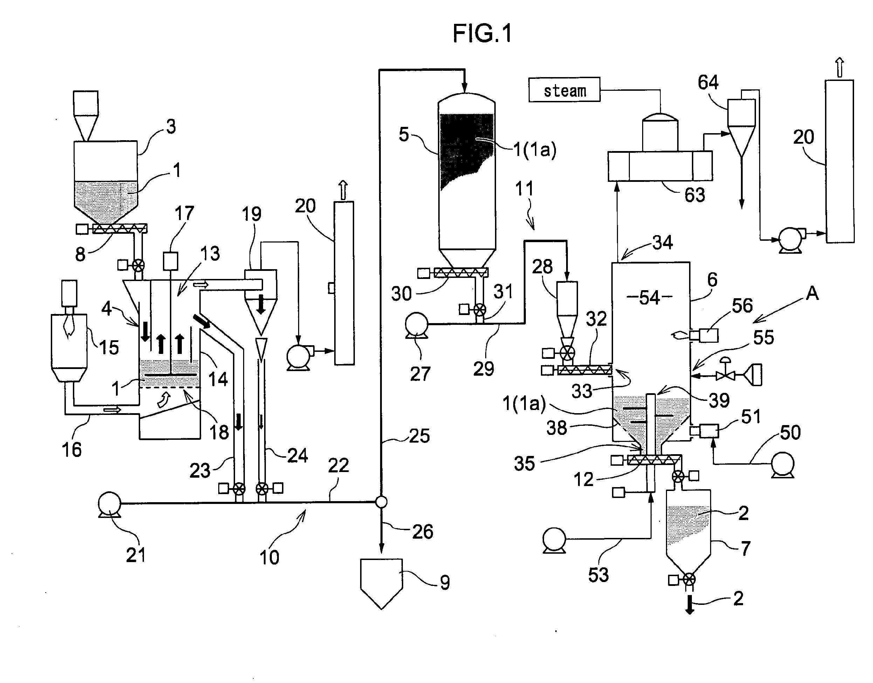

Fig. 1 shows a carbonizing system for carbonizing coffee grounds which are residual substances generated from an extraction process of coffee. This carbonizing system includes a receiving hopper 3 for receiving the coffee grounds generated during the extraction process as processing target material 1, a drying device 4 for the processing target material 1, a dried processing target material storage tank 5 for storing dried processing target material 1 (1a), a carbonizing apparatus A having a carbonizing furnace 6 for carbonizing the processing target material 1a, a carbonized material storage tank 7 for storing the carbonized material 2, a screw feeder 8 for conveying the processing target material 1 in the receiving hopper 3 to the drying device 4, a dried processing target material conveying means 10 capable of conveying the dried processing target material 1a dried by the drying device 4 to the dried processing target material storage tank 5 or an external takeout hopper 9, a dried processing target material feeding means 11 capable of feeding the dried processing target material 1a in the dried processing target material storage tank 5 to the carbonizing furnace 6 and a takeout screw conveyer 12 for conveying substantially horizontally carbonized material 2 carbonized in the carbonizing furnace 6 toward the carbonized material storage tank 7, at an adjustable conveying speed (takeout speed of the carbonized material 2 from the carbonizing furnace 6).

The drying device 4 includes a casing 14 forming a drying chamber 13 capable of accommodating the processing target material 1 therein, a hot air current generator 15 for generating hot air current by combusting city gas, a hot air feeding passage 16 for feeding the hot air current generated by the hot air current generator 15 as drying gas to the drying chamber 13, a stirring device 17 for stirring the processing target material 1 inside the drying chamber 13, a drying gas blowout portion 18 capable of blowing out the drying gas against from under the processing target material 1 inside the drying chamber 13, thus forming a fluid bed, so that the processing target material 1 can be dried under a floating condition and while being stirred. The hot air current blown from the drying chamber 13, as exhaust gas, is subjected to a separating operation therefrom of e.g. fine processing target material particles by means of a cyclone 19 and can then be discharged to the outside through a monitor device 20 for monitoring NOx, SOx, O₂ or the like.

In the dried processing target material conveying means 10, to a conveying passage 22 for conveying the dried processing target material 1a by means of air current from a blower 21, there are connected a dried processing target material exhausting passage 23 extending from the drying chamber 13 and a separated material exhausting passage 24 extending from the cyclone 19. Further, the downstream portion of this dried processing target material conveying means 10 is branched into a storage conveying passage 25 and a takeout conveying passage 26. In operation, the dried processing target material conveying means 10 is capable of taking out the dried processing target material 1a from the processing target material 1 floating inside the drying chamber 13 and conveying it through the storage conveying passage 25 to the dried processing target material storage tank 5 and capable of conveying also the separated material from the cyclone 19 through the storage conveying passage 25 to the dried processing target material storage tank 5.

In the dried processing target material feeding means 11, a feeding conveying passage 29 for conveying the dried processing target material 1a by means of the air current from a blower 27 to a cyclone 28 disposed before the carbonizing furnace 6 is connected to an exhausting passage 31 for the dried processing target material 1a taken out by a screw feeder 30 from the lower section of the dried processing target material storage tank 5. Further, the dried processing target material feeding means 11 is constructed such that the dried processing target material 1a inside the cyclone 28 is fed into the carbonizing furnace 6 by means of a feeding screw feeder 32 providing an adjustable conveying speed (the feeding speed of the dried processing target material 1a).

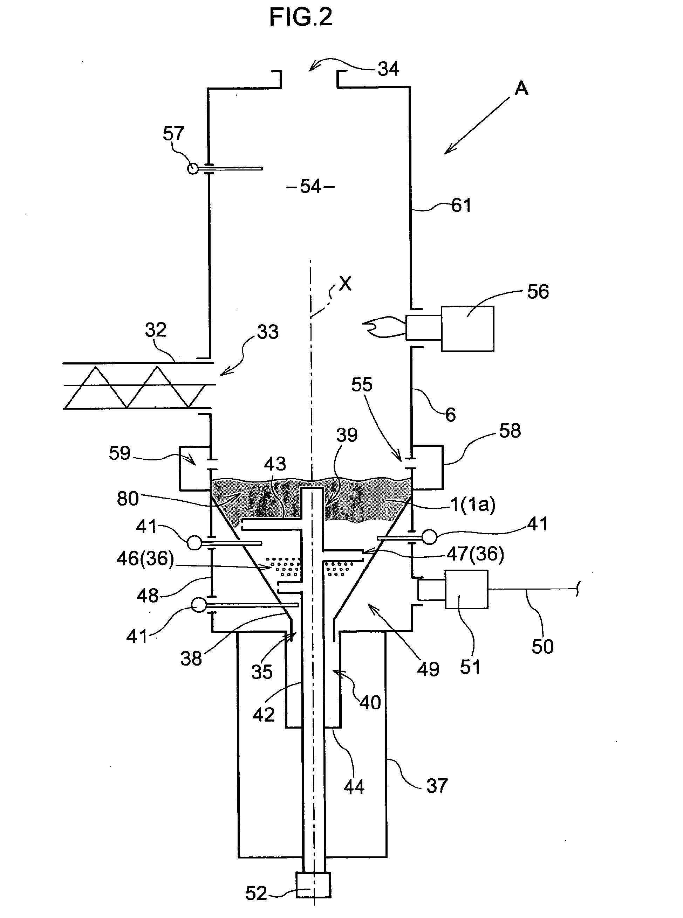

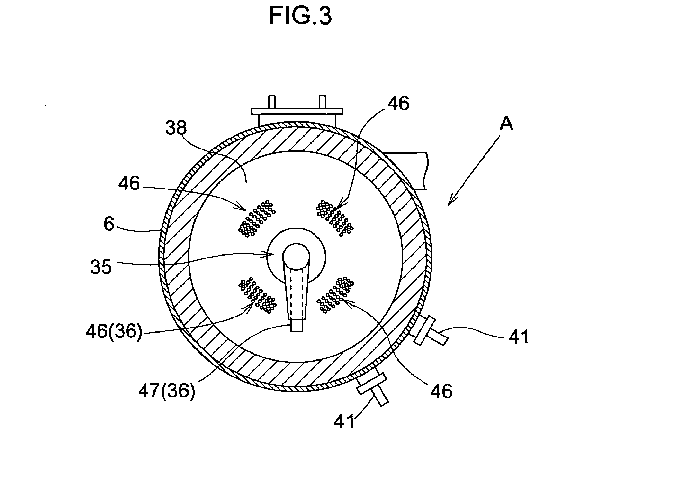

The carbonizing apparatus A, as shown in Fig. 2 and Fig. 3, includes the carbonizing furnace 6 which is constructed as a vertical cylindrical type furnace including a feeding portion 33 for the dried processing target material 1a and an exhausting portion 34 for combustion exhaust gas at an upper section of the furnace and including a takeout portion 35 for the carbonized material 2 and a blowout portion 36 for combustion air at a lower section of the furnace, with the furnace 6 being fixed to a mount 37. Further, in this carbonizing apparatus A, the bottom of the carbonizing furnace is formed of a bottom peripheral wall 38 shaped like a funnel and the takeout portion 35 is formed at the lower end of the bottom peripheral wall 38. Hence, in operation, the dried processing target material 1a fed from the feeding portion 33 by the feeding screw feeder 32 can be moved by its deadweight along the bottom peripheral wall 38 toward the takeout portion 35.

The carbonizing apparatus A further includes a stirring device 39 capable of stirring the dried processing target material 1a inside the carbonizing furnace 6, and a takeout passage 40 is connected to the takeout portion 35. The blowout amount of the combustion air from the blowout portion 36 is adjustable by means of e.g. a valve. In operation of the apparatus, while the dried processing target material 1a fed from the feeding portion 33 is being stirred and combusted spontaneously, by the adjustment of the conveying speed of the takeout screw conveyer 12 disposed at a lower inner portion of the takeout passage 40, the speed of the deadweight movement of the dried processing target material 1a is appropriately adjusted and at such adjusted speed, the material 1a is allowed to be moved by the deadweight of its own toward the takeout portion 35. The processing target material 1a is carbonized slowly in the manner above and then the resultant carbonized material 2 taken out from the takeout portion 35 by the takeout screw conveyer 12 can be conveyed to the carbonized material storage tank 2 for its storage therein.

Moreover, a temperature detecting portion 41 for detecting a combustion temperature of the dried processing target material 1a is incorporated within and penetrated through the bottom peripheral wall 38. And, the blowout amount of the combustion air from the blowout portion 36 can be adjusted according to the temperature of the processing target material 1a detected by the temperature detecting portion 41.

Incidentally, the temperature detecting portion 41 can be a thermocouple type temperature sensor, for instance.

The stirring device 39 has its drive shaft 42 mounted rotatable about a substantially vertical axis X shared by the carbonizing furnace 6. The stirring device 39 includes a plurality of bar-like stirring members 43 spaced apart along the longitudinal direction of the drive shaft 42 and with mutual phase offset in the peripheral direction of the drive shaft 42 and connected to the drive shaft 42 substantially perpendicularly. In operation, as the stirring members 43 are swiveled about the vertical axis X by the rotational drive of the drive shaft 42, the dried processing target material 1a can be stirred substantially horizontally.

Referring more particularly to the drive shaft 42, a passage forming member 44 is disposed obliquely so as to form the takeout passage 40 extending with downward oblique orientation and the drive shaft 42 is rotatably supported to extend through this passage forming member 44 in gas-tight manner. Further, the drive shaft 42 is rotatably driven by means of an electric motor 45 having a reduction mechanism and operably coupled to the lower end of the drive shaft 42.

As shown in Figs. 2 and 3, the blowout portion 36 includes a plurality of lower blowout portions 46 formed adjacent the lower portion of the bottom peripheral wall 38 and stirring blowout portions 47 provided in the respective stirring members 43.

Referring more particularly to the lower blowout portions 46, there is provided a cylindrical casing 48 surrounding the outer periphery of the bottom peripheral wall 38, with forming an air accumulating space 49 between the bottom peripheral wall 38 and the casing 48. And, a main combustion air feeding passage 50 for pressure-feeding combustion air to the air accumulating space 49 is connected to the casing 48 and also a number of small holes are defined in the bottom peripheral wall 38. With this, the combustion air present in the air accumulating space 49 is blown out through the respective small holes to the bottom inside the carbonizing furnace 6 in substantially uniform manner.

Further, the main combustion air feeding passage 50 incorporates an ignition burner 51 so as to ignite the dried processing target material 1a at the start of the carbonizing process. Once the dried processing target material 1a has been ignited, the fed dried processing target material 1a portions can be combusted spontaneously and carbonized thereby one after another.

The stirring blowout portion 47 is formed by the connection of the drive shaft 42 and the stirring members 43. More particularly, the drive shaft 42 and each stirring member 43 are constructed as hollow cylinders with leading end thereof closed. Then, the drive shaft 42 and the stirring members 43 both formed as such hollow cylinders are connected to be communicated with each other at the inner sides thereof. Further, a number of through holes are defined at the leading end of the stirring member 43. In an alternative embodiment, many through holes can be defined at the leading end and/or peripheral portion of the stirring member 43.

At the lower end of the drive shaft 42, there is connected an auxiliary combustion air feeding passage 53 for pressure-feeding combustion air through a rotary joint 52. In operation, while the stirring members 43 are swiveled, the combustion air is blown out into the carbonizing furnace 6 via the through holes defined in these stirring members 43.

Further, as shown in Fig. 2, the inside portion of the carbonizing furnace 6 between the feeding portion 33 and the exhausting portion 34 is formed as an unburned gas combustion space 54. Referring more particularly to this combustion space 54, a secondary combustion air blowout portion 55 is provided adjacent an upper portion of the bottom peripheral wall 38 downwardly of the feeding portion 33 and a stabilizing (combustion aiding) burner 56 is disposed upwardly of the feeding portion 33, thereby to burn the unburned combustion gas generated in the carbonizing process of the dried processing target material 1. And, a thermocouple type temperature sensor 57 is provided for detecting the temperature of this combustion.

Incidentally, it is preferred that the stabilizing burner 56 be used at the time of the start-up of the carbonizing process.

Referring more particularly to the secondary combustion air blowout portion 55, a carbonizing furnace side wall 61 adjacent the upper portion of the bottom peripheral wall 38 is surrounded in the form of a ring by a casing 58 which defines therein an air accumulating space 59 for the secondary combustion air. And, to this casing 58, there is connected a secondary combustion air feeding passage 60 for pressure-feeding the secondary combustion air. Further, the carbonizing furnace side wall 61 defines a number of through holes 62 extending obliquely relative to the radial direction of the carbonizing furnace, so that the secondary combustion air can be fed as a swirling current to the combustion space 54. The stabilizing burner 56 also is disposed such that its blowout direction of the combustion gas may be oriented obliquely relative to the radial direction of the carbonizing furnace.

As shown in Fig. 1, the exhaust gas obtained after the combustion of the unburned combustion gas in the combustion space 54 is caused to pass an exhaust heat recovering boiler 63 for recovering exhaust heat as steam, and solid components contained in the exhaust gas are separated by a cyclone 64 and the separated solid components are exhausted. Also, such components as NOx, SOx, O₂ or the like contained in the exhaust gas can be discharged to the outside through the monitor device 20.

Incidentally, onto the processing target material 1a portion which has been moved to the vicinity of the takeout portion 35 and whose carbonization has progressed to a high extent, un-carbonized processing target material 1a fed from the feeding portion 33 will be accumulated, thus forming an oxygen shielding area 80, so that the carbonization will take place as being shielded from the unburned gas combustion space 54.

As shown in [Table 1], comparisons were made among carbonized material carbonized by the carbonizing furnace 6 provided in the invention's carbonizing apparatus A, carbonized material carbonized by the rotary kiln type carbonizing furnace 6 provided in the carbonizing apparatus A described in Comparison Example, and carbonized material carbonized by the carbonizing furnace included in the carbonizing apparatus of the conventional carbonizing system disclosed in the Japanese Patent Application "Kokai" No. 2000-136390. In the case of the carbonizing furnace of the carbonizing apparatus A of Comparison Example or the carbonizing apparatus of the conventional carbonizing system, through the high-temperature and short-time carbonization process of retaining the processing target material 1 inside the carbonizing furnace for 15 to 20 minutes, there could obtain only carbonized material of low added value due to a three-digit (carbonizing apparatus of Comparison Example or two-digit (carbonizing apparatus of the convention), large BET specific surface area.(m²/g). In contrast, in the case of the carbonizing apparatus A of the present invention, through the low-temperature and long-time carbonization process of retaining the processing target material 1 inside the carbonizing furnace 6 for 90 minutes, there could obtain carbonized material of high added value due to a one-digit small BET specific surface area (m²/g).

**[Table 1]**

| | carbonizing apparatus of invention | carbonizing apparatus of Convention | carbonizing apparatus of Comparison Example |
|---|---|---|---|
| retention period of carbonized material | 90 minutes | 15-20 minutes | 15-20 minutes |
| BET specific surface area (m²/g) of carbonized material | < 10 | < 100 | < 1000 |

### [Second Embodiment]

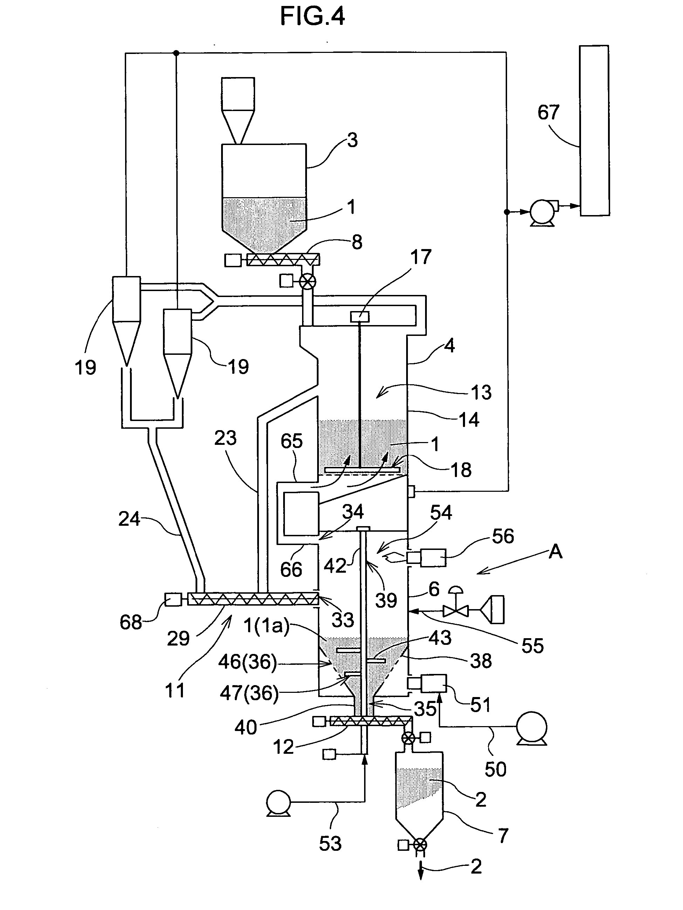

Fig. 4 shows a further embodiment of a carbonizing system according to the present invention. In this carbonizing system, the cylindrical drying device 4 is mounted coaxially atop the carbonizing furnace 6. The exhausting potion 34 of the carbonizing furnace 6 and the drying chamber 13 of the drying device 4 are connected to each other via a duct 65. And, there is provided a drying gas feeding passage 66 capable of feeding the combustion exhaust gas generated in the carbonizing furnace 6 as drying gas to the drying device 4. Further, in this carbonizing system, there is provided a drying gas blowout portion 18 capable of blowing out the drying gas against from under the processing target material 1 present inside the drying chamber 13, thus forming a fluid bed, so that the processing target material 1 can be dried while being stirred and floated the drying gas after being blown into the drying chamber 13, as the exhaust gas, is subjected to a separating operation of fine processing target material particles thereof by the cyclone 19 and then discharged to the outside through an exhaust cylinder 67. Further, any excess portion of the combustion exhaust gas which was fed to the drying device 4 can also be discharged to the outside through the exhaust cylinder 67.

Further, in the dried processing target material feeding means 11, to the feeding conveying passage 29 for conveying the dried processing target material 1a by a screw conveyer 68 to the feeding portion 33 of the carbonizing furnace 6, there are connected the dried processing target material exhausting passage 23 extending from the drying chamber 13 and the separated material exhausting passage 24 extending from the cyclone 19. With this construction, the dried processing target material 1a taken out from the processing target material 1 floating inside the drying chamber 13 and the separated material from the cyclone 19 can be fed through the feeding conveying passage 29 to the feeding portion 33 of the carbonizing furnace 6.

The rest of the construction of this embodiment is same as the first embodiment.

### [Other Embodiments]

1. The carbonizing apparatus, the carbonizing system and the carbonizing method according to the present invention can be used for carbonizing various organic materials other than the coffee grounds, such as used tea leaves, chaff, sawdust, buckwheat chaff, as the processing target material.
2. The carbonizing apparatus, the carbonizing system and the carbonizing method according to the present invention can include a controller for controlling the feeding amount of the combustion air into the carbonizing furnace, based on detection result of the combustion temperature of the dried processing target material inside the carbonizing furnace.

### Industrial Applicability

The invention can readily carbonize a processing target material to a desired carbonized condition, with using various organic materials such as used tea leaves, chaff, sawdust, buckwheat chaff, as the processing target material and can be installed even in a limited installment space.

### Brief Description of the Drawings

[Fig. 1] a schematic of a carbonizing system,
[Fig. 2] a vertical section of a carbonizing apparatus,
[Fig. 3] a cross section of principal portions of the carbonizing apparatus,
[Fig. 4] a schematic of a carbonizing system relating to a second embodiment,

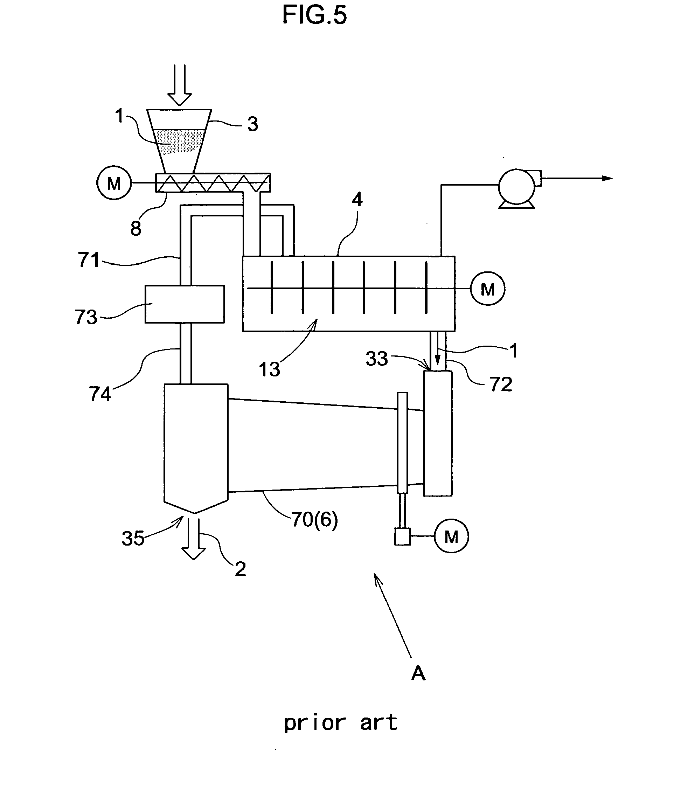

[Fig. 5] a schematic of a carbonizing system of Comparison Example.

### Description of Reference Marks

- 1: processing target material
- 1a: processing target material (dried)
- 2: carbonized material
- 4: drying device
- 5: storage tank
- 6: carbonizing furnace
- 10: conveying means
- 11: feeding means

- 13: drying chamber
- 18: drying gas blowout portion
- 33: feeding portion
- 34: exhausting portion
- 35: takeout portion
- 36: blowout portion
- 38: peripheral wall
- 39: stirring device
- 41: temperature detecting portion
- 43: stirring member
- 54: combustion space
- 63: exhaust heat recovering boiler
- 71: drying gas feeding passage
- A: carbonizing apparatus
- X: vertical axis

## Claims

1. A carbonizing apparatus comprising:
a carbonizing furnace having a feeding portion for a processing target material, a takeout portion for a carbonized material, a blowout portion for combustion air and an exhausting portion for combustion exhaust gas;
a stirring device capable of stirring the processing target material inside the carbonizing furnace;
a blowout amount of the combustion air from the blowout portion being adjustable;
the apparatus being operable to carbonize the processing target material fed from the feeding portion, with stirring, spontaneously combusting and moving the material while moving this material toward the takeout portion and subsequently to take out the resultant carbonized material from the takeout portion;
wherein said carbonizing furnace is constructed as a vertical type including said feeding portion and said exhausting portion at an upper section of the furnace and including said takeout portion and said blowout portion at a lower section of the furnace, so that the processing target material can be moved by the deadweight thereof toward the takeout portion, a takeout speed of the carbonized material from the takeout portion being adjustable; and
the stirring device comprises a stirring member capable of swiveling about a vertical axis.

2. The carbonizing apparatus according to claim 1, wherein said carbonizing furnace includes a temperature detecting portion capable of detecting temperature of the processing target material, the blowout amount of the combustion air from the blowout portion being adjustable according to the temperature of the processing target material detected by said temperature detecting portion.

3. The carbonizing apparatus according to claim 1, wherein said blowout portion is provided in a peripheral wall of the carbonizing furnace and in the stirring member, respectively.

4. The carbonizing apparatus according to claim 1, wherein an inside of the carbonizing furnace located between said feeding portion and said exhausting portion is formed as a combustion space for unburned combustion gas.

5. A carbonizing system comprising:
a drying device for a processing target material;
a storage tank for the processing target material;
conveying means for conveying the processing target material dried by the drying device to the storage tank; and
feeding means capable of feeding the processing target material in the storage tank to a carbonizing apparatus.

6. The carbonizing system according to claim 5, wherein said carbonizing apparatus includes:
a carbonizing furnace having a feeding portion for a processing target material, a takeout portion for a carbonized material, a blowout portion for combustion air and an exhausting portion for combustion exhaust gas;
a stirring device capable of stirring the processing target material inside the carbonizing furnace;
a blowout amount of the combustion air from the blowout portion being adjustable;
the system being operable to carbonize the processing target material fed from the feeding portion, with stirring, spontaneously combusting and moving the material while moving this material toward the takeout portion and subsequently to take out the resultant carbonized material from the takeout portion.

7. The carbonizing system according to claim 6, wherein said carbonizing furnace is constructed as a vertical type including said feeding portion and said exhausting portion at an upper section of the furnace and including said takeout portion and said blowout portion at a lower section of the furnace, so that the processing target material can be moved by the deadweight thereof toward the takeout portion, a takeout speed of the carbonized material from the takeout portion being adjustable; and
the stirring device includes a stirring member capable of swiveling about a vertical axis.

8. The carbonizing system according to claim 6, wherein said carbonizing furnace includes a temperature detecting portion capable of detecting temperature of the processing target material, the blowout amount of the combustion air from the blowout portion being adjustable according to the temperature of the processing target material detected by said temperature detecting portion.

9. The carbonizing system according to claim 7, wherein said blowout portion is provided in a peripheral wall of the carbonizing furnace and in the stirring member, respectively.

10. The carbonizing system according to claim 6, wherein an inside of the carbonizing furnace located between said feeding portion and said exhausting portion is formed as a combustion space for unburned combustion gas.

11. The carbonizing system according to claim 6, wherein an exhaust heat recovering boiler is connected to said exhausting portion.

12. The carbonizing system according to claim 5, wherein said drying device includes a drying chamber capable of accommodating the processing target material and a drying gas blowout portion capable of blowing out drying gas from under the processing target material inside the drying chamber, thus forming a fluid bed for drying the processing target material under a floating condition, said conveying means being capable of taking out dried processing target material floating inside the drying chamber and conveying this material to the storage tank.

13. A carbonizing system including the carbonizing apparatus according to claim 1 and a drying device for the processing target material,
wherein said drying device is provided integral with an upper portion of a carbonizing furnace included in the carbonizing apparatus and the system further comprises a drying gas feeding passage capable of feeding combustion exhaust gas of the processing target material inside the carbonizing furnace as drying gas to said drying device.

14. The carbonizing system according to claim 13, wherein said drying device includes a drying chamber capable of accommodating the processing target material and a drying gas blowout portion capable of blowing out drying gas from under the processing target material inside the drying chamber, thus forming a fluid bed for drying the processing target material under a floating condition, the system further comprising feeding means capable of taking out dried processing target material floating inside the drying chamber and conveying this material to the feeding portion.

15. A carbonizing method comprising the steps of:
drying a processing target material by a drying device;
subsequently conveying the dried material to a storage tank for its temporary storage in the tank; and
subsequently feeding the material for its carbonization.
